# EUROPEAN PATENT APPLICATION

(11) **EP 0 848 343 A2**
(43) Date of publication of application: **17.06.1998**
(21) Application number: 97310030.8
(22) Date of filing: 11.12.1997
(51) Int. Cl.: G06F 17/60

(54) **Shopping system**

(30) Priority: 13.12.1996 JP 333387/96
(71) Applicant: Hitachi, Ltd., Chiyoda-ku, Tokyo 101-0062 (JP)
(72) Inventor: Hiroya, Masaaki, Aoba-ku, Yokohama-shi (JP); Chiba, Hiroyuki, Miyamae-ku, Kawasaki-shi (JP); Ito, Atsushi, Meguro-ku, Tokyo (JP); Kawatsura, Yoshiaki, Aoba-ku, Yokohama-shi (JP); Teramura, Takeshi, Aoba-ku, Yokohama-shi (JP); Tomiyama, Tomochika, Fujimi-shi (JP)
(74) Representative: Calderbank, Thomas Roger

(57) **Abstract**

A shopping system for safely communicating shopping data among information processors has first to third information processors (1, 2, 3). The first information processor (1) has a first storage unit (13) for storing an address to which ordering data is to be transmitted and a second storage unit (11) for storing electronic money and transmits ordering data in accordance with an order. The second information processor (2) responds to the ordering data to issue a payment address and invoice data (51) obtained by digitally signing an invoice. The first information processor responds to the invoice data to transmit an amount of electronic money corresponding to the order to the payment address. The third information processor (3) responds to reception of the electronic money to issue a receipt (53) digitally signed by a private key. The first information processor transmits the digitally signed receipt received from the third information processor to the second information processor. The first information processor can digitally sign the invoice data digitally signed by the second information processor to transmit it to the third information processor. The third information processor checks two signatures on the received invoice data of one is signed by the second information processor and the other is signed by the first information processor. The first information processor transmits a request for repaying the electronic money transmitted to the third information processor in accordance with the order to the second information processor, the second information processor transmits repayment permit data including data for specifying a repaying apparatus, an amount of refund and data for specifying a refund receiving apparatus after digitally signing the repayment permit data by a private key, and the first information processor responds to the electronic money remitted in accordance with the repayment request to transmit a repayment receipt obtained by digitally signing data including identification of the repayment permit data by a private key from the second information processor to the third information processor.

## Description

The present invention relates to a shopping system for safely carrying out transactions by utilizing electronic money on a communication network.

US patent No. 5,440,634 and Secure Electronic Transaction (SET) Specification; June 17, 1996 teach an electronic value transfer system and cashless transaction, and digital signatures.

Today, a system for doing shopping by using an open network such as an internet has come to the front. In existing systems, a retail shop offers goods information to a consumer through a world-wide web (WWW) server, and the consumer selects goods desired to be purchased by watching the goods information at a WWW browser and gives an order. Principally, a method of using a credit card and a method of using electronic money are employed for payment.

In internet shopping, security matters. Since anyone can access the internet with ease, there is a possibility that information is eavesdropped and altered by a third person. Also, there is a possibility that a third person impersonate an authorized user to carry out transactions. Further, there is a possibility that a person concerned who participates in transactions substitutes data, denies the contents of transactions and runs away with the money.

To cope with the problems as above, the existing system utilizes encryption of data, digital signatures and a certificate authority. For encryption of data, such methods as data encryption standard (DES) and RSA are available.

The digital signature is used as a technique for preventing substitution of data, specifying a planner of data and authenticating a communication partner. The digital signature is data encrypted by calculating a Hash value of the data to be signed and applying asymmetric key cryptography algorithm represented by RSA to the Hash value. As algorithm for calculation of the Hash value, SHA-1 and MD5 are used. For verifying the validity of the digital signature, data decrypted by using the other encryption key paired with the encryption key used when the digital signature is prepared is compared with a Hash value of original data when the digital signature is prepared and it is checked whether one coincides with the other. Typically, the digital signature together with its original data is transferred to a communication partner.

In a shopping system and an electronic money system conforming to the existing open network, encryption and digital signature are utilized to prevent eavesdropping and alteration of data during communication. In the case of transaction protocol presupposing credit card payment in SET, only the processing of giving an order to a retail shop and the processing of obtaining approval of a card company are carried out through the open network but the processing for payment is carried out through a banking organ network. In this case, an invoice certifying the contents of transactions is mailed to a card owner and completion of payment can be evidenced by a withdrawal record from a bank account. Accordingly, in the SET, data concerning invoice and receipt is not handled.

When transactions are carried out by utilizing electronic money on the open network, all processings including the payment process are essentially executed on the open network. Therefore, electronic data which can objectively certify the contents of transactions and the completion of payment must be presented during transactions through the communication network. It matters that the data is rewritten by a third person in the course of communication and the data is rewritten by a person concerned who receives the data or a recipient at his or her discretion.

Further, in a system in which an information processor for giving an order or a client, an information processor for receiving or managing the order or an ordering management server and an information processor for receiving and managing the money or a payment server are connected to a communication network, when a third organ enjoying confidence is agential for execution of payment, ordering information and payment information must be transferred between the information processors without being substituted and when any troubles are raised later on, the contents of ordering and the completion of payment must be confirmed by causing a person participating in the transactions to offer the ordering information and the payment information and it must be certified that the data is not substituted.

Further, not only when goods is purchased but also when goods are returned or transactions are canceled, the money must be repaid safely to a purchaser by using electronic money through the communication network. In this case, unauthorized reception of a refund by a third person must be prevented.

An object of the present invention is to provide a system and a method which can provide a person participating in transactions with data for certifying the contents of transactions and the state of payment on a communication network when shopping is carried out on the communication network by using electronic money.

Another object of the present invention is to provide a system and a method which can avoid any troubles in transactions among an information processor for ordering, an information processor for receiving and managing an order and an information processor for receiving and managing the money which are connected to a network.

Still another object of the present invent on is to provide a system and a method which can repay a refund to an authorized purchaser by preventing the refund from being tapped by an unauthorized third person when the money of returned goods or an amount of money excessively paid in advance is repaid to the purchaser by using electronic money on the communication network.

According to one aspect of the present invention, a shopping system for communicating shopping data comprises:
a first information processor adapted to transmit ordering data in accordance with an order and having a first storage unit for storing an address to which the ordering data is to be transmitted and a second storage unit for storing electronic money;
a second information processor connected to the first information processor through a network and being responsive to the ordering data to issue a payment address corresponding to the order and invoice data obtained by digitally signing an invoice, the first information processor being operative to respond to the invoice data to transmit an amount of electronic money corresponding to the order to the payment address; and
a third information processor connected to the first and second information processors through the network and being responsive to reception of the amount of electronic money to issue a receipt digitally signed by a private key, the first information processor being operative to transmit to the second information processor the digitally signed receipt received from the third information processor.

The first information processor can digitally sign the invoice data digitally signed by the second information processor to transmit it to the third information processor, and the third information processor can check (verify) two signatures on the received invoice data of which one is signed by the second information processor and the other is signed by the first information processor.

The second information processor can check (verify) whether the signature on the receipt received from the first information processor coincides with the payment address affixed to the invoice data.

The first information processor can transmit a request for repaying the electronic money transmitted to the third information processor in accordance with the order to the second information processor, the second information processor can transmit repayment permit data including data for specifying a repaying apparatus, an amount of refund and data for specifying a refund receiving apparatus after digitally signing the repayment permit data by a private key, and the first information processor can respond to the electronic money remitted in accordance with the repayment request to transmit the repayment receipt digitally signed by the private key on data including identification of the payment permit data by means of the second information processor to the third information processor.

The second information processor can use identification data included in certificate data digitally signed by a certificate authority, in order to specify the first information processor or the user thereof.

According to another aspect of the present invention, an information processor connected to a shopping system for communicating shopping data comprises:
a controller for transmitting ordering data in accordance with an order;
a first storage unit for storing an address to which the order data is to be transmitted; and
a second storage unit for storing electronic money,
wherein the controller responds to a payment address issued in accordance with the ordering data and corresponding to the order and invoice data obtained by digitally signing an invoice to transmit an amount of electronic money corresponding to the order to the repayment address and transmits a copy of a receipt issued in accordance with the amount of electronic money and digitally signed by a private key.

According to still another aspect of the present invention, an information processor connected to a shopping system for communicating shopping data comprises:
a control unit responsive to received ordering data to issue a repayment address corresponding to the order and invoice data obtained by digitally signing an invoice; and
a communication unit for receiving a receipt,
wherein the control unit checks (verifies) whether a signature on the received receipt coincides with the payment address affixed to the invoice data.

According to still another aspect of the present invention, an information processor connected to a shopping system for communicating shopping data comprises:
a control unit responsive to reception of an amount of electronic money corresponding to an order to issue a receipt digitally signed by a private key; and
a communication unit for communicating invoice data and receipt data,
wherein the control unit checks (verifies) the signature on the received invoice data.

In the drawings

Fig. 1 is a block diagram showing the overall construction of the present invention.

Fig. 2 is a block diagram showing the construction of a client.

Fig. 3 is a block diagram showing the construction of an ordering management server.

Fig. 4 is a block diagram showing the construction of an electronic money payment server.

Fig. 5 is a flow chart showing flow of messages, invoice data and receipt data in the purchase process.

Fig. 6 is a diagram showing a data structure of the invoice data.

Fig. 7 is a diagram showing a data structure of the receipt data.

Fig. 8 is a flow chart showing the process by the client in the purchase process.

Fig. 9 is a flow chart showing the process by the ordering management server in the purchase process.

Fig. 10 is a flow chart showing the process by the electronic money payment server in the purchase process.

Fig. 11 is a diagram showing an ordering data structure stored in a storage unit of the ordering management server.

Fig. 12 is a diagram showing an ordering data structure stored in a storage unit of the ordering management server.

Fig. 13 is a diagram showing a payment data structure stored in a storage unit of the electronic money payment server.

Fig. 14 is a diagram showing a client screen on which ordering data is displayed.

Fig. 15 is a diagram showing a client screen on which invoice data is displayed.

Fig. 16 is a diagram showing a client screen on which receipt data is displayed.

Fig. 17 is a flow chart showing messages, repayment permit data and repayment receipt data in the repayment process.

Fig. 18 is a diagram showing a data structure of the repayment permit data.

Fig. 19 is a diagram showing a data structure of the repayment receipt data.

Fig. 20 is a flow chart showing the process by the client in the repayment process.

Fig. 21 is a flow chart showing the process by the ordering management server in the repayment process.

Fig. 22 is a flow chart showing the process by the ordering management server in the repayment process.

Fig. 23 is a flow chart showing the process by the electronic money payment server in the repayment process.

Fig. 24 is a diagram showing a client screen on which repayment request data is displayed.

Fig. 25 is a diagram showing a client screen on which the repayment permit data is displayed.

An embodiment of an on-line shopping system according to the present invention will be described hereunder with reference to the accompanying drawings.

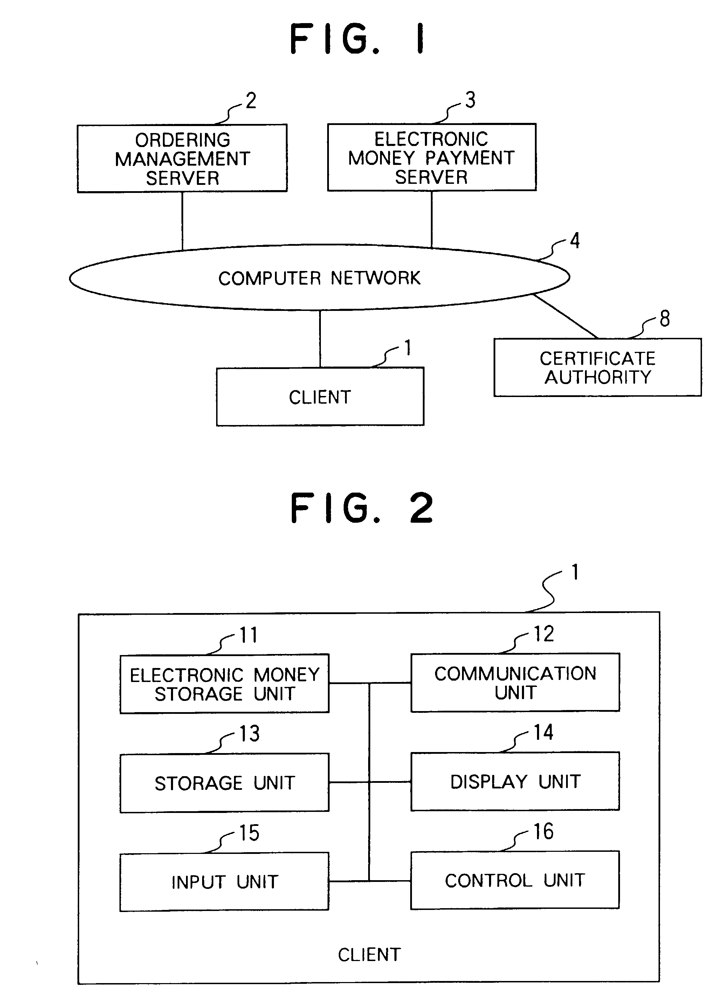

Fig. 1 shows, in block diagram form, the overall construction of the system of the present invention which is connected to a computer network 4 and a certificate authority 8. An information processor 1 gives an order for goods and service and is called a client, an information processor 2 accepts and manages the order and is called an ordering management server, and an information processor 3 accepts and manages the money and is called an electronic money payment server. The computer network 4 interconnects the information processors 1 to 3 and is typically exemplified by an internet.

The client 1 is constructed as shown, in block diagram form, in Fig. 2. An electronic money storage unit 11 stores electronic money and may be realized with either an IC memory, such as an IC card (also called a smart card) or an IC memory with hardware logic, or another external memory device such as a harddisc. A communication unit 12 communicates with another information processor and is used to transmit and receive electronic money, ordering data, invoice data and receipt data. A storage unit 13 stores programs and various kinds of data as well as a private key for affixing a digital signature. A display unit 14 displays the ordering data, the invoice data and receipt data. An input unit 15 inputs, for example, the ordering data. A control unit 16 is for controlling programs running in the information processor land is adapted to prepare and verify digital signatures and control input and output, communication and the execution sequence explained later.

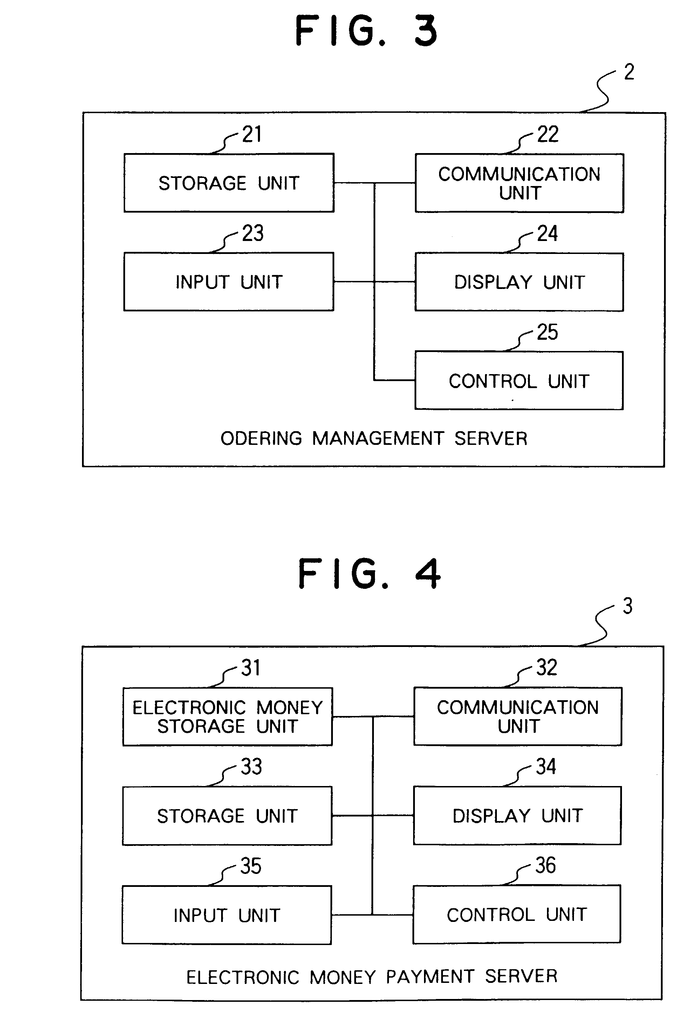

The ordering management server 2 is constructed as shown, in block diagram form, in Fig. 3. A storage unit 21 stores programs, order data and customer data as well as a private key used for affixing a digital signature. A communication unit 22 communicates with another information processor and is adapted to transmit and receive ordering data, invoice data and receipt data. An input unit 23 inputs various kinds of data, and a display unit 24 displays various kinds of data. The input unit 23 and the display unit 24 may be omitted. A control unit 25 controls programs running in the management server and is adapted to prepare and verify digital signatures and control input and output, communication and the execution sequence.

The electronic money payment server 3 is constructed as shown, in block diagram form, in Fig. 4. An electronic money storage unit 31 stores electronic money and like the electronic money storage unit 11, it is realized with either an IC card or another external storage unit. A communication unit 32 communicates with another information processor and is adapted to transmit and receive electronic money, invoice data and receipt data. A storage unit 33 stores programs and various kinds of data as well as a private key for affixing a digital signature. An input unit 35 inputs various kinds of data and a display unit 34 displays various kinds of data. The display unit 34 and the input unit 35 may be omitted. The control unit 36 controls programs running in the payment server 3.

The embodiment of the present invention will now be described by way of two examples of purchasing goods or service (a purchase process) or repaying goods or service (a repayment process) in the on-line shopping system of the present invention.

### (a) Purchase of goods or service (purchase process)

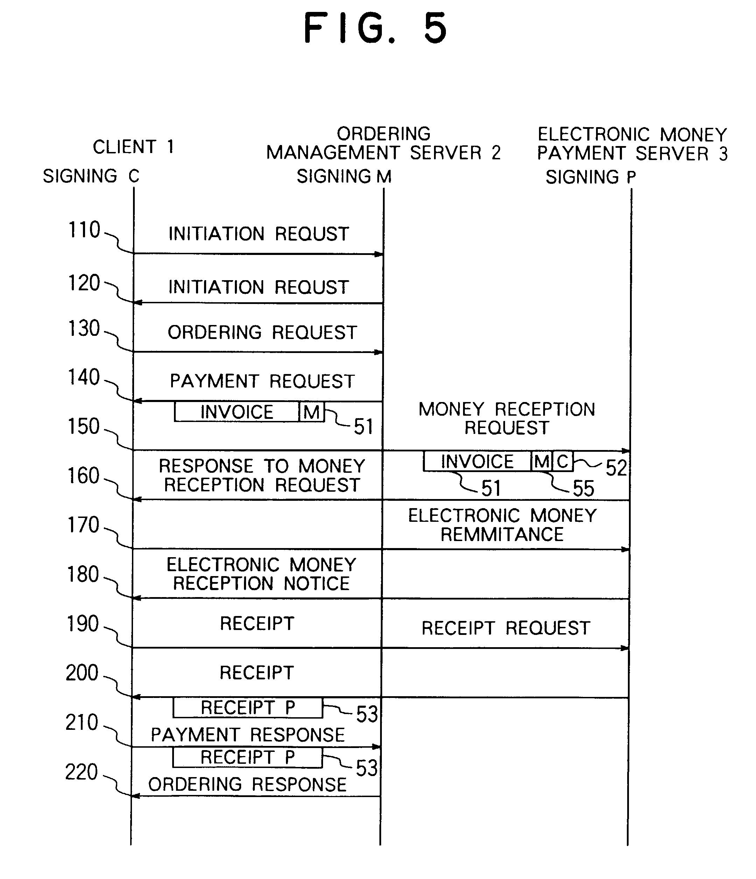

Fig. 5 is a flow chart showing flow of messages, invoice data 51 and receipt data 53 in the purchase process. Messages 110 to 220 are each transmitted and received between the information processors. The invoice data 51 is described with "M" which indicates that the invoice data 51 is digitally signed by the ordering management server 2. A money receipt request message 150 is described with a digital signature 52 affixed by the client 1. The receipt data 53 is described with "P" which indicates that the receipt data 53 is digitally signed by the electronic money payment server 3. The digital signature "C" designated by reference numeral 52 and described on different invoice data 51 indicates that the invoice data 51 is digitally signed by the client 1.

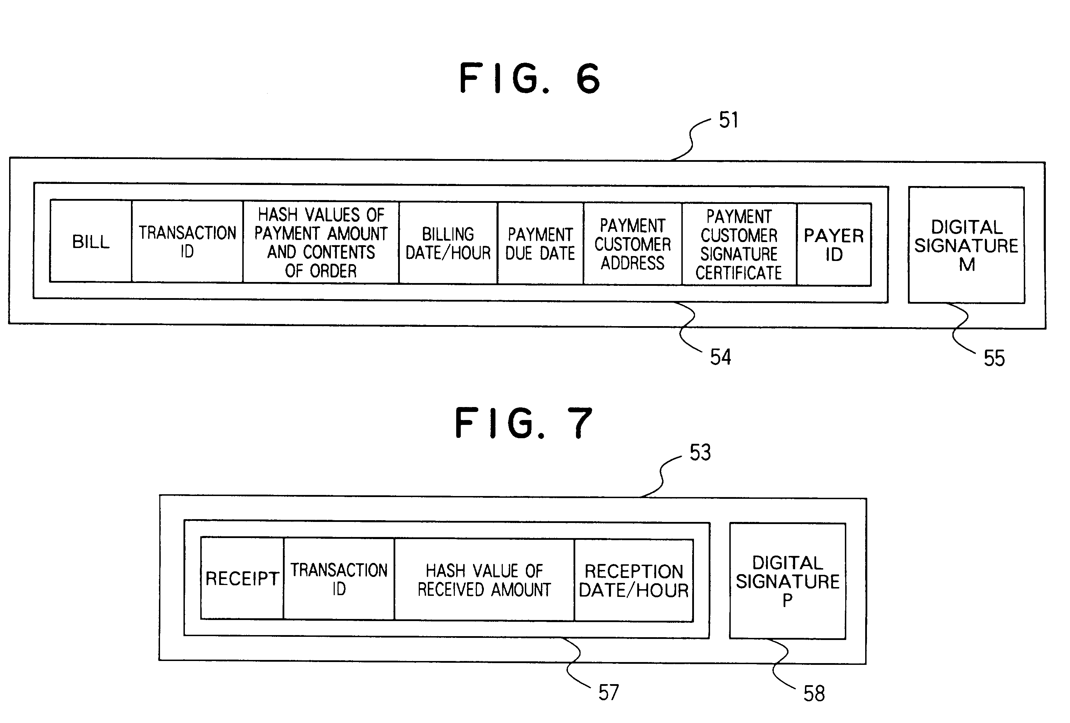

Fig. 6 shows a data structure of the invoice data 51 and Fig. 7 shows a data structure of the receipt data 53. Data items illustrated in the figures are mere examples and other data items may be used. The digital signature is obtained by calculating a Hash value of data to be signed and encrypting the Hash value by a private key. The Hash function used for calculating the Hash value is represented by algorithm such as SHA-1 and MDS. An asymmetric key cryptography algorithm such as RSA (elliptic curve cryptography) is used for the method for encryption by the private key. For verification of the digital signature, it is checked whether data obtained by decoding the digital signature by a public key paired with the private key coincides with data obtained by calculating a Hash value of plaintext data to be signed. A digital signature 55 is obtained by encrypting a Hash value of data block 54 by a private key owned by the ordering management server 2. A digital signature 58 is obtained by encrypting a Hash value of data block 57 by a private key owned by the electronic money payment server 3.

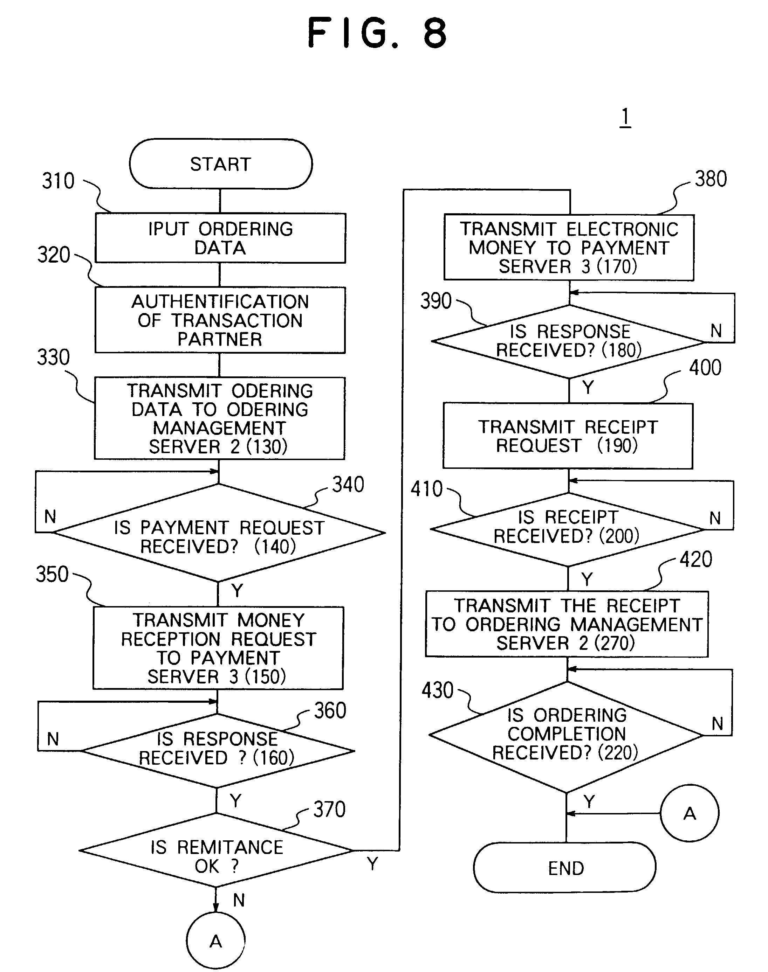

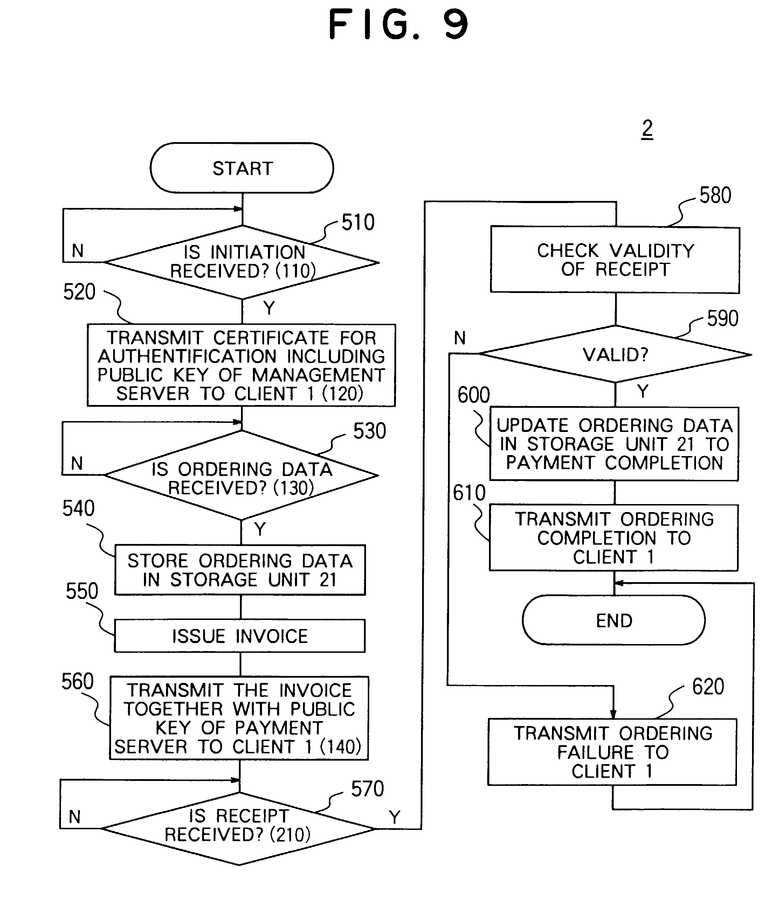

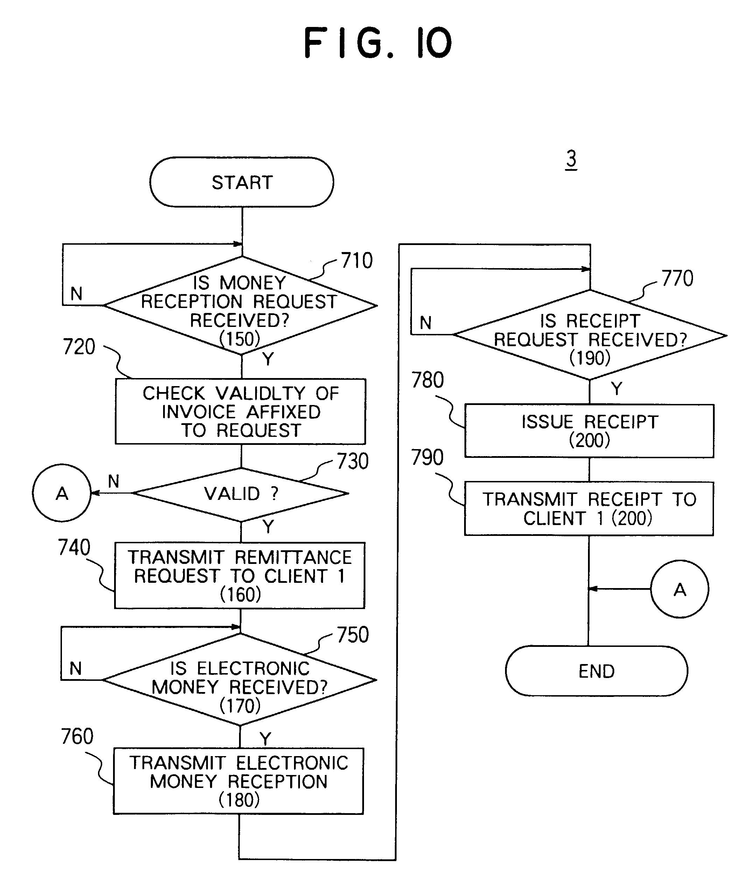

The processing procedure by the client 1 is shown in a flow chart of Fig. 8, the processing procedure by the ordering management server 2 is shown in a flow chart of Fig. 9 and the processing procedure by the electronic money payment server 3 is shown in a flow chart of Fig. 10.

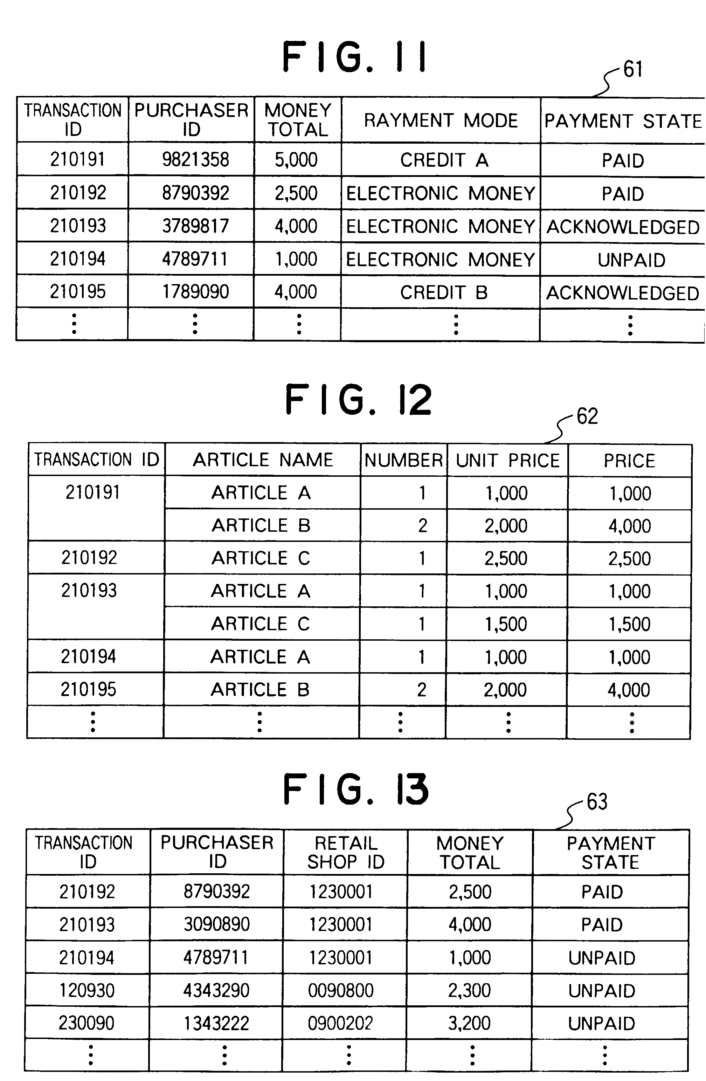

Ordering data pieces 61 and 62 stored in the storage unit 21 of the ordering management server 2 are shown in Figs. 11 and 12. Payment data 63 stored in the storage unit 33 of the electronic money payment server 3 is shown in Fig. 13.

Referring now to Figs. 5, 8, 9 and 10, the processing procedure of the purchase process will be described.

In the following description, the term "authentication" means certifying that a recipient in now communication coincides with a recipient with whom an originator is about to communicate, and the term "certificate for authentification" means data which includes a public key and an identifier of the owner of the public key and which is digitally signed by the certificate authority.

A user designates, on the display screen of the client 1, goods/service and the number thereof from goods information sent from the server 2 to the client 1 and designates ordering data from the electronic money and credit (the bank account may further be added), and the designated goods/service, the number thereof and the ordering data are inputted to the client 1.

When the ordering data is inputted to the client 1 (step 310), the client makes a request (step 320) to the ordering management server for a message 110 having a certificate for authentification (including a public key) of the ordering management server. When receiving the message 110 (step 510), the ordering management server prepares a response message 120 including the certificate for authentification (inclusive of the public key) of the ordering management server, digitally signs the whole of the message and sends the message 120 to the client (step 520). A certificate of the payment server the management server has obtained from the certificate authority is enclosed in an invoice and sent in the form of a message 140.

In step 320, the client 1 takes the public key of the ordering management server from the sent certificate and verifies the validity of the digital signature on the message 120. If valid, an identifier indicative of the owner of the public key included in the sent certificate is displayed, thereby allowing a consumer to select the coincidence or non-coincidence with a partner with whom the consumer transacts. If coincidence is selected, the authentification of the ordering management server is proven to be successful and the program proceeds to the next step. If non-coincidence is selected, the processing ends.

Then, the client 1 transmits ordering data in the form of a message 130 to the ordering management server (step 330). The client now digitally signs the ordering request message including the ordering data. A certificate of the client is also transmitted along with the ordering data through the medium of this message.

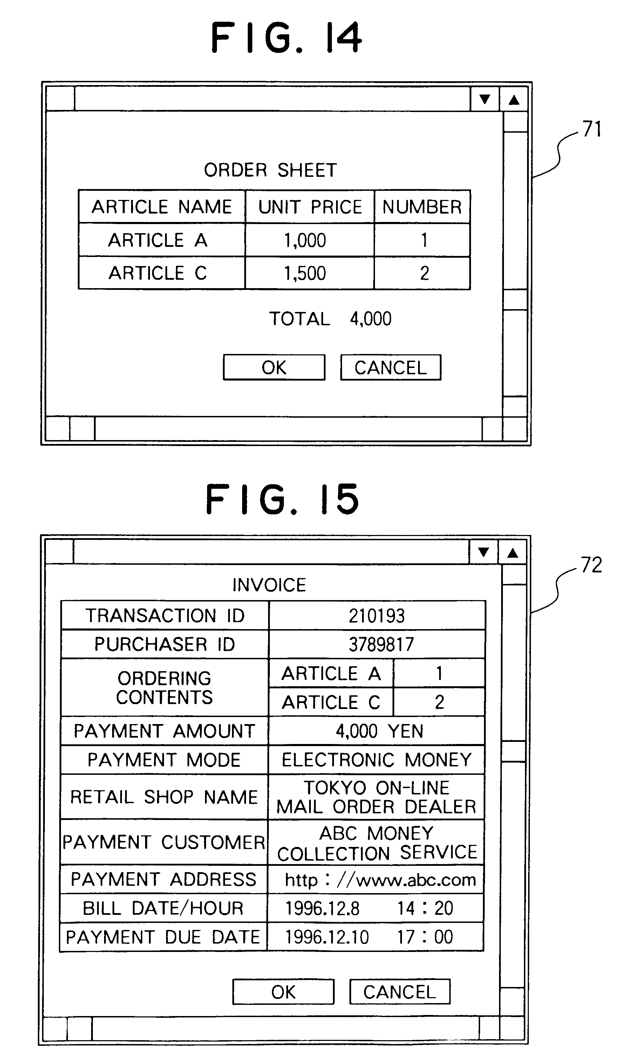

An example of an ordering data screen displayed on the display unit of the client 1 is shown in Fig. 14. When the ordering management server 2 receives the message 130 (step 530), the ordering data is stored in the storage unit 21 (step 540) and invoice data 51 is prepared (step 550). An identifier for identification of the client is inserted in the invoice data 51. The identifier is identical to payer ID in Fig. 6. An identifier of the owner of the public key included in the certificate of the client is used as the payer ID. In place of the aforementioned identifier, the public key included in the certificate may be used. The ordering management server digitally signs the invoice data.

The management server 2 transmits to the client 1 the message 140, that is, a payment request message including the invoice data affixed with signature (step 560).

An invoice data screen 72 displayed on the display unit of the client 1 is shown in Fig. 15. When the payment request message 140 is received, the screen 72 may preferably be displayed.

When receiving the message 140 (step 340), the client 1 verifies the validity of the digital signature on the invoice. The invoice is displayed in compliance with the requirement by the consumer (the owner of the client). For example, when the price is low, no display is effected. If the digital signature is valid, the program proceeds to the next step but if invalid, an error is displayed, stopping the processing (A).

The client 1 transmits a money reception request message 150 including the invoice data 51 and affixed with the digital signature 52 of the client to the payment server (step 350). At that time, the certificate for authentification of the client is concurrently sent. The payment server receiving the message 150 in step 710 verifies the validity of the digital signatures on the aforementioned message affixed by the ordering management server and affixed by the client. What is meant by verification of the validity of the digital signature by the ordering management server is to verify whether the digital signature of the ordering management server is affixed in order to check if the transmission contents is acceptable to the payment server. For example, when public keys of acceptable ordering management servers are stored in storage units of a plurality of ordering management servers, respectively, and the digital signature is verified by any one of the public keys, it can be decided whether the invoice sent from the client is transmitted from an ordering management server which is acceptable to the payment server. On the other hand, for verification of the signature of the client, it is first checked whether the payer ID included in the invoice coincides with the identifier of the owner of the public key included in the sent certificate of the client. If coincident, the validity of the client digital signature on the message 150 is verified by the public key included in the certificate. If the digital signature is valid, it can be confirmed that the partner to which the ordering management server has issued the invoice is identical with the transmitter of the message 150.

If the digital signatures of the ordering management server and the client are valid, a money reception response message including data indicative of payment permission is prepared. The payment server digitally signs the message.

The payment server sends the money reception message 160 to the client (step 740).

The client verifies whether the digital signature of the received message 160 (step 360) has been signed by the payment server which is about to pay the money. Since the client has received the public key of the payment server from the ordering management server through the medium of the message 140, it verifies the validity of the digital signature by the public key. If the digital signature is valid, it is certified that the message 160 is from the payment server designated by the ordering management server, indicating that the authentification of the payment server is successful. If the authentification succeeds (step 370), the program proceeds to the next step. But if unsuccessful, a failure of the authentification is displayed and the processing ends (A).

The client sends electronic money data 170 to the payment server (step 380).

When one or more going and returning is needed between the client and the payment server for the sake of sending the electronic money, the payment server 3 sends electronic money data to the client through the medium of a message 180. The messages 170 and 180 are transmitted by a frequency which is necessary for transmission of the electronic money data. When a final electronic money reception notice is sent through the medium of the message 180, a receipt may be sent to thereby omit messages 190 and 200. When the final electronic money data is sent through the medium of the message 170 (that is, the message from the client to the server), only a receipt is sent through the medium of the message 180. The payment server digitally signs the receipt.

The client receiving the receipt in step 410 verifies the validity of the digital signature on the receipt by the public key of the payment server. If valid, the program proceeds to the next step but if invalid, an error is displayed to end the processing. Thereafter, the client transmits a copy of the receipt in the form of a message 210 to the ordering management server, thus informing the server that the payment is finished (step 420).

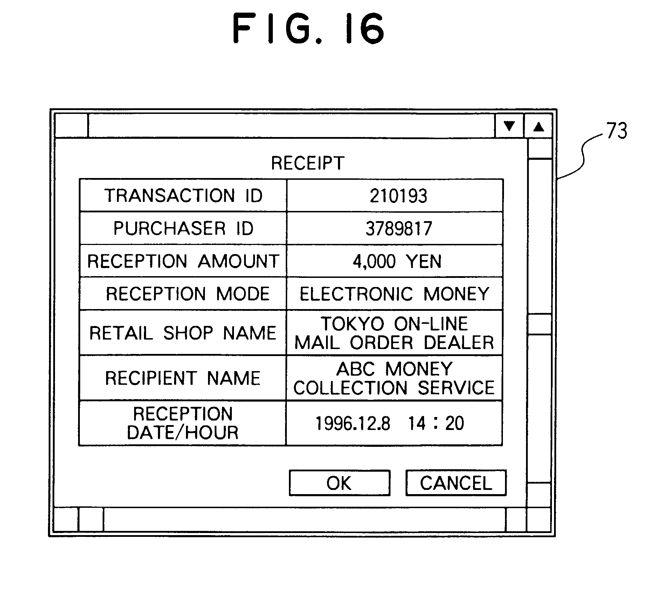

A receipt data screen 73 to be displayed on the display unit of the client 1 is shown in Fig. 16. When the receipt response message 200 is received, the screen 73 may preferably be displayed.

The ordering management server verifies the validity of the digital signature on the receipt by the public key of the payment server (step 580). The public key used at that time is the public key included in the certificate which is included in the invoice when the invoice is prepared. Through this, it can be confirmed whether the payment is made to the payment server the ordering management server has designated.

If the result of the foregoing processing is valid, the ordering management server 2 transmits to the client a message 190 including data indicative of the completion of transaction but if invalid, it transmits to the client an error message 220 indicating that the receipt is not authorized (step 670).

When the client 1 receives the ordering response message 220 from the ordering management server 2 (step 430), the purchase process ends.

Through the above processing, safe transactions can be effected when the client 1, the ordering management server 2 and the electronic money payment server 3 are each connected to the computer network 4. The invoice data 51 and receipt data 53 can be used as evidences proving the contents of transactions and the payment completion state in the event that any troubles in transactions are raised later on. Further, by the aforementioned step 720, any unauthorized access to the electronic money payment server 3 can be prevented.

In the foregoing embodiment, the digital signature affixed by the ordering management server on the message 120 can be omitted. In this case, the process in which the client authenticates the ordering management server can be unneeded.

The digital signature affixed by the client on the message 130 can be omitted. In this case, the payer ID of the invoice can be unneeded and the process of the digital signature of the client can be unneeded in the payment server.

### (b) Repayment (repayment process)

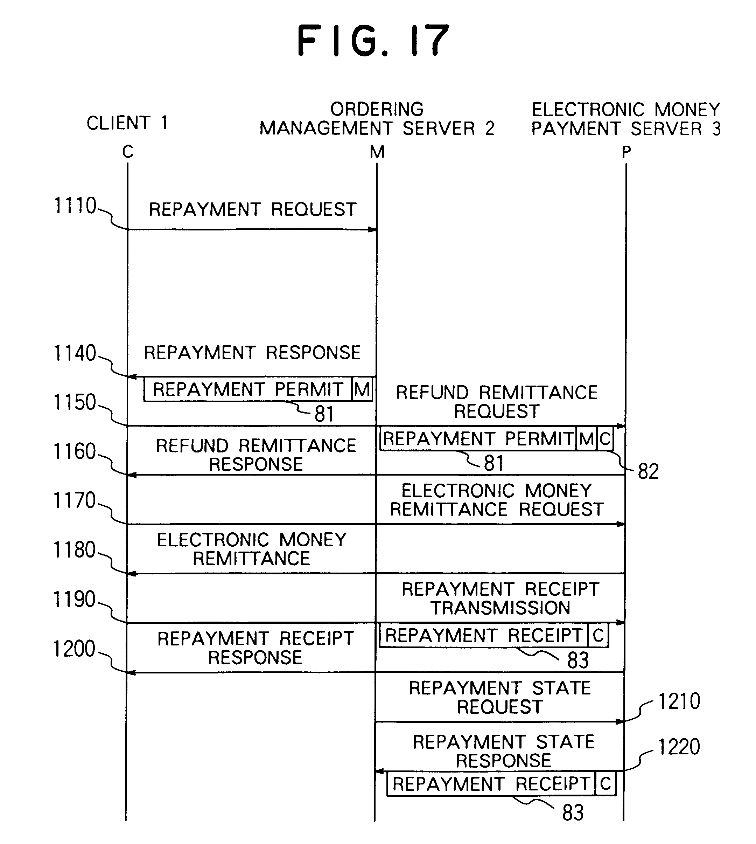

Flow of messages, repayment permit data (also called repayment permission data) 81 and repayment receipt 83 is shown in a flow chart of Fig. 17. Messages 1110 to 1220 are each transmitted and received between the information processors. The repayment permit data 81 is described with "M" which indicates that the repayment permit data 81 is digitally signed by the ordering management server 2. A refund remittance request message 1150 is described with a digital signature 82 affixed by the client 1. The repayment receipt 83 is described with "C" which indicates that the repayment receipt 83 is digitally signed by the client 1.

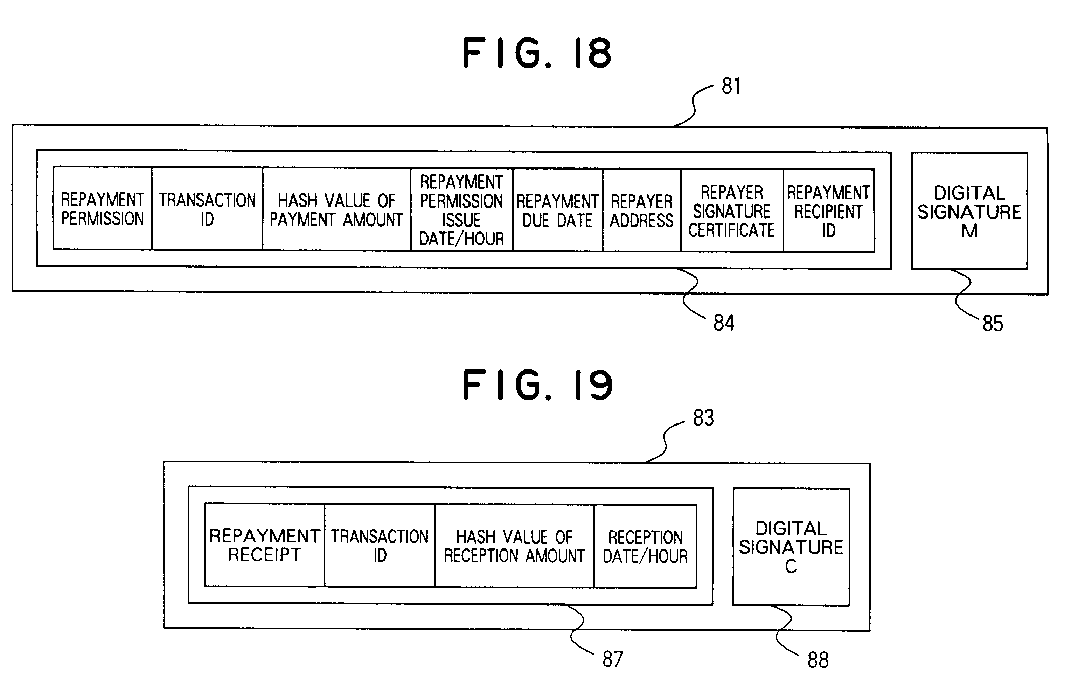

Fig. 18 shows a data structure of the repayment permit data 81 and Fig. 19 shows a data structure of the repayment receipt 83. Data items illustrated in the figures are mere examples and other data items may be used. A digital signature 85 is obtained by encrypting a Hash value of data block 84 by a private key owned by the ordering management server 2. A digital signature 88 is obtained by encrypting a Hash value of data block 87 by a private key owned by the client 1.

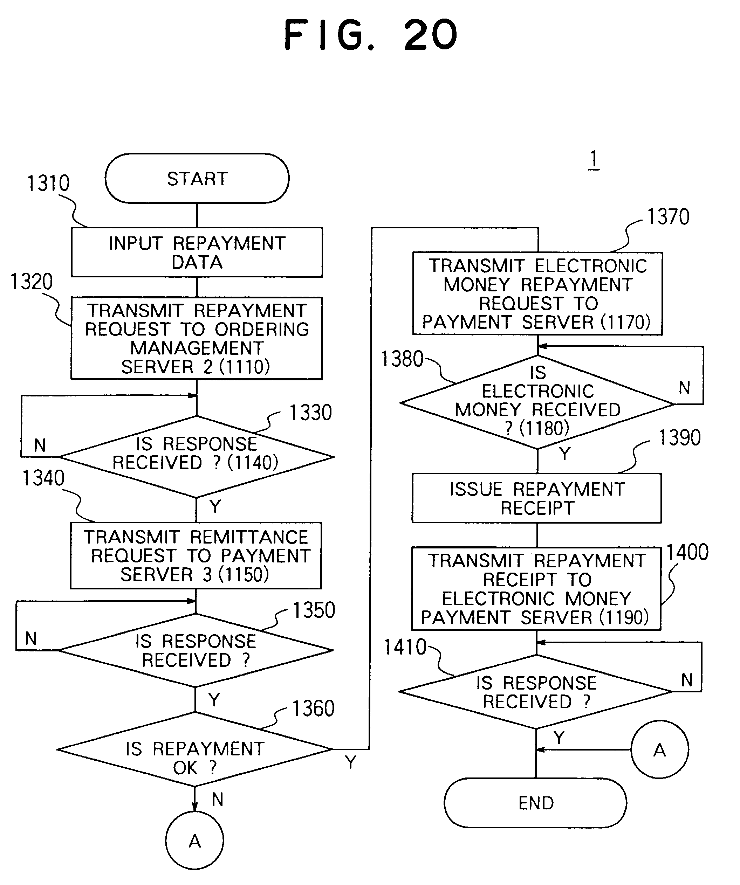

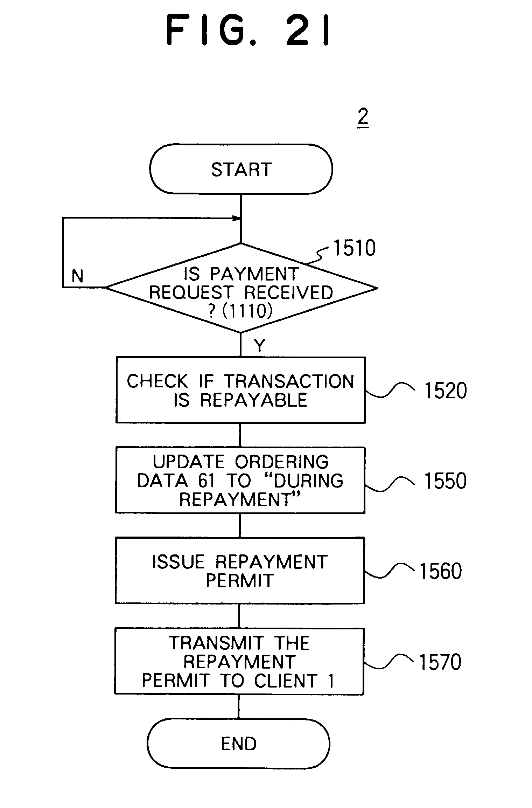

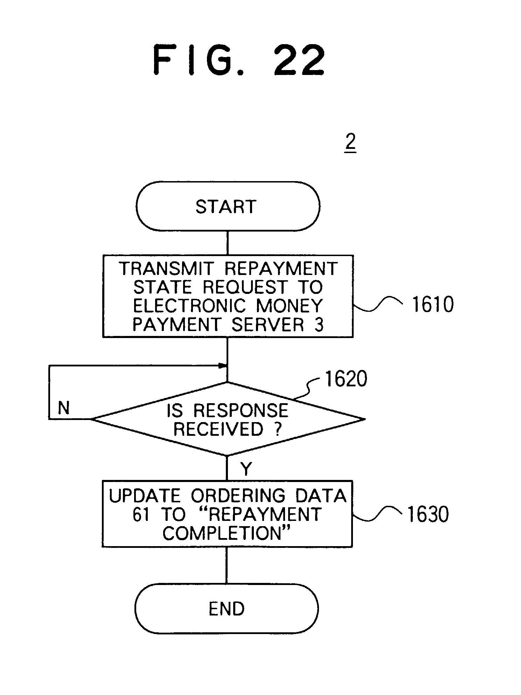

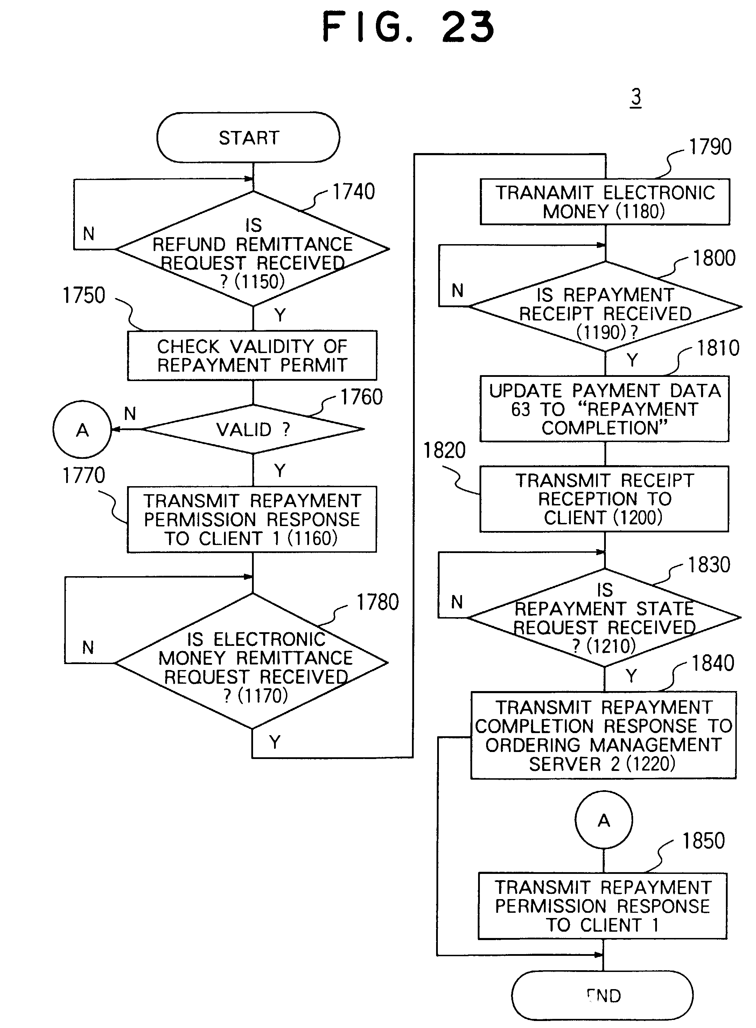

The processing procedure by the client 1 is shown in a flow chart of Fig. 20, the processing procedure by the ordering management server 2 is shown in flow charts of Figs. 21 and 22 and the processing procedure by the electronic money payment server 3 is shown in a flow chart of Fig. 23.

Referring now to Figs.17, 20, 21, 22 and 23, the processing procedure of the repayment process will be described.

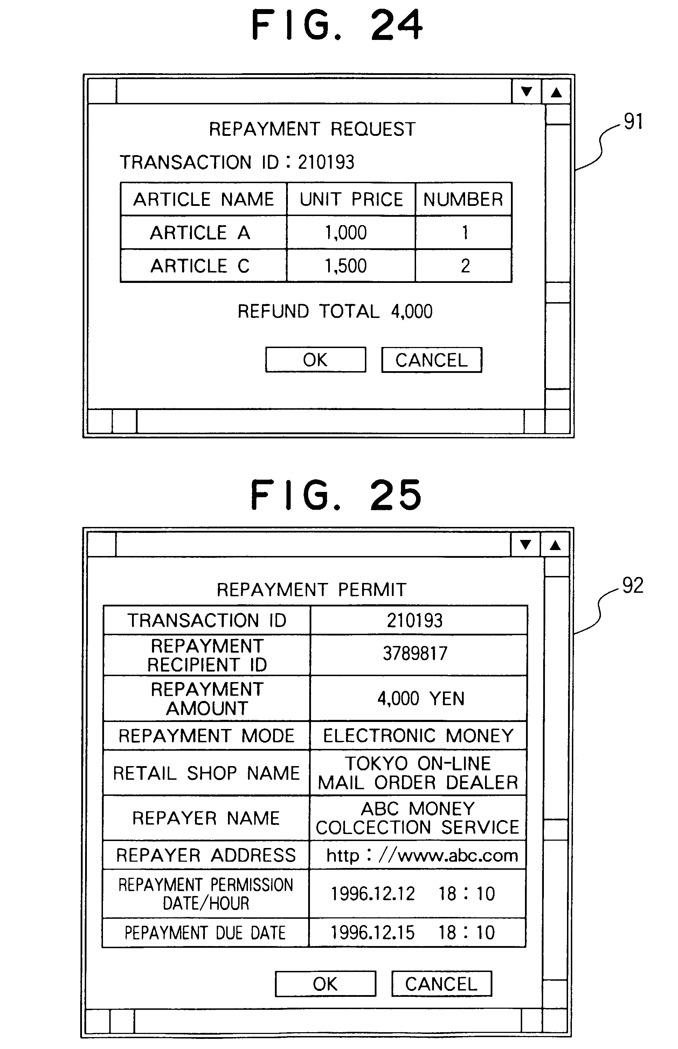

When data necessary to make a repayment in the client 1 is inputted using the input unit 15 (step 1310), a repayment request message 1110 to be described below is transmitted to the ordering management server 2 (step 1320). Fig. 24 shows a screen 91 for repayment request which is displayed on the display unit 14 of the client 1.

When the client digitally signs an ordering request message during purchase, the client also digitally signs the repayment request message 1110 . This process is necessary to certify that the purchaser coincides with the repayment requester. In order for the management server (step 1510) to verify the validity of the digital signature on the message 1110 (step 1520), the management server uses the same public key as that of the client used during purchase. This permits authentification of an authorized repayer.

When the client has not signed an ordering request message during purchase, the client need not digitally sign the message 1110 because the identity of the purchaser to the repayment requester cannot be verified by the digital signature. In this case, the validity of the repayment requester can be verified by the transmission of a receipt during purchase through the medium of the message 1110.

When the ordering management server 2 receives the aforementioned message 1110 (step 1510), it is checked whether transaction ID designated by the message is repayable. If repayable, the ordering data 61 in the storage unit 21 is updated to "during repayment" (step 1550), the repayment permit data 81 is prepared (step 1560) and a repayment response message 1140 including the repayment permit data 81 is transmitted to the client 1 (step 1570).

Like the message 140 in the purchase process, the message 1140 is digitally signed by the ordering management server.

Fig. 25 shows a screen 92 of the repayment permit data displayed on the display unit 14 of the client 1. The screen 92 may be displayed when the repayment response message 1140 is received.

When the client 1 receives the response message 1140 (step 1330), a refund remittance request message 1150 including the repayment permit data 81 included in the response message 1140 is affixed with the digital signature 82 encrypted by the private key owned by the client 1 and is transmitted to the electronic money payment server 3 (step 1340).

However, when no digital signature is affixed on the message 1110, the digital signature can be omitted because the validity of the digital signature cannot be verified.

When the electronic money payment server 3 receives the request message 1150 (step 1740), it is checked by using the repayment permit data 81 and the digital signature 82 whether the transaction is repayable (step 1750).

When the digital signature of the client is verified, it is checked that an owner identifier of the public key included in the certificate which is transmitted together with the present message by the client coincides with repayment recipient ID included in the payment permit. If coincident, the validity of the digital signature which is affixed to the present message by the client by means of the public key included in the certificate is verified. If valid (step 1760), authentification of the client is I successful. In other words, it is certified that the person receiving repayment permission coincides with the person transmitting the present message.

Even when the digital signature is not used in the message 1110, a digital signature may be affixed if the payment server desires to leave a record as to to whom the repayment is made, for the purpose of specifying an unauthorized repayment requester.

More specifically, in a checking method in this case, it is first checked by using the public key of the ordering management server whether the aforementioned repayment permit data 81 is digitally signed by the ordering management server 2. The payment server may store, in advance, the public key of the management server in the storage unit 33 or may transmit the cercificate of the ordering management server together with the payment certificate data 81. The certificate includes data for identifying the order management server and the public key. Further, the certificate is digitally signed by the certificate authority. When the client has digitally signed data including the payment permit data 81 transmitted from the client, it is checked whether the payment recipient coincides with the person who has affixed the digital signature 82. In this case, data for identifying the repayment recipient is included in the repayment permit data 81 and as this identifying data and so data for identifying the owner of the public key included in the certificate may be used. Firstly, it is checked whether the data for identifying the owner of the public key included in the certificate transmitted together with the digitally signed repayment permit data 81 coincides with the data for identifying the payment recipient included in the repayment permit data 81. Further, by verifying the validity of the digital signature by the public key included in the certificate, it is decided whether an authorized repayment recipient makes a request to the payment server for repayment. In an alternative, when communication data is encrypted (in other words, when the communication path is encrypted), the payment permit data 81 will not be usurped and therefore, the step for the client to sign the repayment permit data 81 and the step for the payment server to verify the validity of the repayment recipient can be omitted. When the result of the step 1750 is valid (step 1760), a refund remittance response message 1160 including data indicative of payment permission is transmitted to the client 1 (step 1770).

The necessity for affixture of the digital signature of the payment server to the message 1160 is small because the client receives the money and so the necessity for authentification of the payment server in this case is smaller than in the case where the money is sent to the payment server.

When the result of step 1750 is invalid (step 1760), a refund remittance response message 1160 including data indicative of impermissible repayment is transmitted to the client 1 (step 1850). When the client 1 receives the response message 1160 (step 1350) and the message 1160 includes the data indicative of impermissible repayment (step 1360), a message 1170 indicative of electronic money remittance request is transmitted to the electronic money payment server 3 (step 1370). When in step 1360 the message 1160 includes the data indicative of impermissible repayment, the processing ends.

When receiving the message 1170 (step 1780), the electronic money payment server 3 remits electronic money 1180 to the client 1 (step 1790). The transmission of the messages 1170 and 1180 may be effected plural times. When receiving the electronic money 1180 (step 1380), the client 1 prepares repayment receipt data 83 (step 1390) and transmits a repayment receipt transmission message 1190 including the receipt data 83 and digitally signed by the client to the electronic money payment server 3 (step 1400).
In the case of the authorized requester, this is necessary for certifying that the repayment is completed and in the case of the unauthorized requester, this is necessary for specifying the criminal later on.

When the electronic money payment server 3 receives the message 1190 (step 1800), the payment data 63 stored in the storage unit 33 is updated to "repayment completion" (step 1810) and a repayment receipt response message 1200 is transmitted to the client 1 (step 1820). When the client 1 receives the response message 1200 (step 1410), the processing ends.

The ordering management server 2 transmits a repayment completion inquiry message 1210 to the electronic money payment server 3 (step 1610). When receiving the inquiry message 1210 (step 1830), the electronic money payment server 3 transmits a repayment state response message 1220 including the repayment completion state to the ordering management server 2 (step 1840). If the repayment has already been finished at that time, a completion response is transmitted. The repayment receipt 83 received from the client 1 may be transmitted through the medium of the response message 1220. When the ordering management server 2 receives the response message 1220 (step 1620), the ordering data 61 stored in the storage unit 21 is updated to "repayment completion" (step 1630) and the processing ends. Instead of the fact that the ordering management server inquires the payment server about the repayment completion state, the payment server may informs the ordering management server of the repayment completion when it receives the repayment receipt from the client.

Through the above processing, the repayment can be made safely by using the electronic money when the client 1, the ordering management server 2 and the electronic money payment server 3 are each connected to the computer network 4. The repayment permit data 81 and repayment receipt data 83 can be used as evidences proving the contents of repayment and the repayment completion state in the event that any troubles in the repayment are raised later on. Further, by the step 1750, any unauthorized access to the electronic money payment server 3 can be prevented and unauthorized receipt of the refund by other persons can be prevented.

Programs for execution of the processing shown in Fig. 8 or 20 may be stored in a portable memory medium such as a floppy disc and the medium may be written to the storage unit 13 of the client 1 to execute the processing. The same holds true for the ordering management server 2 and the electronic money payment server 3.

In the foregoing embodiments, some alterations are possible. For example, the message 110 may be transmitted to the certificate authority to obtain a certificate, the digital signature of the client on the message 1110 may be omitted, the paired messages 1120 and 1130 may be omitted, the digital signature of the client on the message 1150 may be omitted, and the messages 1210 and 1220 may be omitted because confirmation by a different means, for example, confirmation by mail may be employed. When the payment server receives the repayment receipt from the client without using the message 1210, the message 1220 may be transmitted.

## Claims

1. A shopping system having a plurality of information processors to communicate shopping data among them, comprising:
a first information processor (1) adapted to transmit ordering data in accordance with an order and having a first storage unit (13) for storing an address to which the ordering data is to be transmitted and a second storage unit (11) for storing electronic money;
a second information processor (2) connected to said first information processor (1) through a network (4) and being responsive to said ordering data to issue a payment address corresponding to the order and invoice data (51) obtained by digitally signing an invoice, said first information processor being operative to respond to said invoice data to transmit an amount of electronic money corresponding to said order to said payment address; and
a third information processor (3) connected to said first and second information processors through said network and being responsive to reception of said amount of electronic money to issue a receipt (53) digitally signed by a private key, said first information processor being operative to transmit to said second information processor said digitally signed receipt received from said third information processor.

2. A shopping system according to claim 1, wherein said first information processor digitally signs said invoice data digitally signed by said second information processor to transmit it to said third information processor, and said third information processor checks two signatures on said received invoice data of which one is affixed by said second information processor and the other is affixed by said first information processor.

3. A shopping system according to claim 1 or 2, wherein said second information processor checks whether the signature on said receipt received from said first information processor coincides with said payment address affixed to said invoice data.

4. A shopping system according to claim 1, 2 or 3, wherein said first information processor transmits a request for repaying the electronic money transmitted to said third information processor in accordance with the order to said second information processor, said second information processor transmits repayment permit data including data for specifying a repaying apparatus, an amount of refund and data for specifying a refund receiving apparatus after digitally signing the repayment permit data by a private key, and said first information processor responds to the electronic money remitted in accordance with said repayment request to transmit to said third information processor the repayment receipt digitally signed on data including identification of said repayment permit data by the private key.

5. A shopping system according to claim 4, wherein said second information processor uses identification data included in certificate data digitally signed by a certificate authority, in order to specify said first information processor or a user thereof.

6. A shopping system according to claim 4, wherein said second information processor uses the private key used for specifying said first information processor during ordering, in order to specify said first information processor or a user thereof.

7. A shopping system according to claim 4, wherein said first information processor digitally signs said repayment request transmitted to said second information processor. apparatus.

8. A shapping system according to claim 4, wherein said first information processor digitally signs and sends said repayment permit data digitally signed by said second information processor to said third information processor, and wherein said third information processor checks whether a receiver noted in said repayment permit data coincides with a sender of said repayment permit data to said third information processor.

9. A shopping system according to claim 8, wherein said third information processor uses identification data included in certificate data regarding said first information processor or a user thereof to identify said receiver noted in said repayment permit data.

10. An information processor connected to a shopping system for communicating shopping data, comprising:
a controller (15, 16) for transmitting ordering data in accordance with an order;
a first storage unit (13) for storing an address to which the ordering data is to be transmitted; and
a second storage unit (11) for storing electronic money,
wherein said controller responds to a payment address issued in accordance with said ordering data and corresponding to said order and invoice data (51) obtained by digitally signing an invoice to transmit an amount of electronic money corresponding to said order to said payment address and transmits a copy of a receipt (51) issued in accordance with said amount of electronic money and digitally signed by a private key.

11. An information processing apparatus according to claim 10, wherein a request for repaying the electronic money transmitted corresponding to the order is transmitted, and a repayment receipt obtained by digitally signing repayment permit data by a private key is transmitted in accordance with the electronic money remitted in accordance with said repayment request.

12. An information processor connected to a shopping system for communicating shopping data, comprising:
a control unit (25) responsive to received ordering data to issue a payment address corresponding to the order and invoice data (51) obtained by digitally signing an invoice; and
a communication unit (22) for receiving a receipt,
wherein said control unit checks whether a signature on the received receipt coincides with the payment address affixed to said invoice data.

13. An information processor according to claim 12, wherein said control unit digitally signs repayment permit data including data for specifying a repaying apparatus, an amount of refund and a refund receiving apparatus by a private key and transmits said repayment permit data.

14. An information processor connected to a shopping system for communicating shopping data, comprising:
a control unit (36) responsive to reception of an amount of electronic money corresponding to an order to issue a receipt (53) digitally signed by a private key; and
a communication unit (32) for communicating invoice data and receipt data,
wherein said control unit checks the signature on the received invoice data.

15. A method of communicating shopping data among a plurality of information processors in a shopping system having the plurality of information processors, comprising the steps of:
transmitting ordering data from a first information processor (1);
responding to said ordering data to issue a payment address corresponding to the order and invoice data (51) obtained by digitally signing an invoice from a second information processor (2);
responding to said invoice data to transmit an amount of electronic money corresponding to said order from said first information processor to said payment address;
responding to reception of said amount of electronic money to issue a receipt (53) digitally signing by a private key from a third information processor (3); and
transmitting said digitally signed receipt received from said third information processor from said first information processor to said second information processor.

16. A shopping method according to claim 15, wherein said first information processor digitally signs said invoice data digitally signed by said second information processor to transmit it to said third information processor, and said third information processor checks two signatures on said received invoice data of which one is affixed by said second information processor and the other is affixed by said first information processor.

17. A shopping method according to claim 15 or 16, wherein said second information processor checks whether the signature on said receipt received from said first information processor coincides with said payment address affixed to said invoice data.

18. A shopping method according to claim 15 or 16, wherein said first information processor transmits to said second information processor a request for repaying the electronic money transmitted to said third information processor in accordance with the order, said second information processor transmits repayment permit data including data for specifying a repaying apparatus, an amount of refund and data for specifying a refund receiving apparatus after digitally signing the repayment permit data by a private key, and said first information processor responds to the electronic money remitted in accordance with said repayment request to transmit a repayment receipt obtained by digitally signing data including identification of said repayment permit data by a private key from said second information processor to said third information processor.

19. A shopping method according to claim 18, wherein said second information processor uses identification data included in certificate data digitally signed by a certificate authority, in order to specify said first information processor or a user thereof.
